(19) Europäisches Patentamt
European Patent Office
Office européen des brevets

(11) **EP 1 315 643 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(21) Anmeldenummer: **00963965.9**

(22) Anmeldetag: **06.09.2000**

(51) Int Cl.:
*B60R 21/01* *(2006.01)*  *G01L 19/12* *(2006.01)*
*G01L 23/08* *(2006.01)*

(86) Internationale Anmeldenummer:
**PCT/DE2000/003075**

(87) Internationale Veröffentlichungsnummer:
**WO 2002/020313 (14.03.2002 Gazette 2002/11)**

(54) **VORRICHTUNG UND VERFAHREN ZUR BEREITSTELLUNG EINES VON EINER ÄNDERUNG DES UMGEBUNGSDRUCKES ABHÄNGIGEN SIGNALS**

DEVICE AND METHOD OF PROVIDING A SIGNAL IN RESPONSE TO A CHANGE OF THE AMBIENT PRESSURE

DISPOSITIF ET PROCEDE DE METTRE A DISPOSITION UN SIGNAL DEPENDANT D'UNE VARIATION DE LA PRESSION AMBIANTE

(84) Benannte Vertragsstaaten:
**DE FR GB IT**

(43) Veröffentlichungstag der Anmeldung:
**04.06.2003 Patentblatt 2003/23**

(73) Patentinhaber: **SIEMENS AKTIENGESELLSCHAFT**
**80333 München (DE)**

(72) Erfinder: **TYROLLER, Tobias**
**93049 Regensburg (DE)**

(56) Entgegenhaltungen:
**WO-A-94/11223**         **DE-A- 4 324 511**
**DE-A- 19 858 760**     **US-A- 4 257 273**

- **PATENT ABSTRACTS OF JAPAN vol. 009, no. 116 (P-357), 21. Mai 1985 (1985-05-21) & JP 60 003527 A (TOKICO KK), 9. Januar 1985 (1985-01-09)**
- **SOVIET INVENTIONS ILLUSTRATED Week 9333, 6. Oktober 1993 (1993-10-06) Derwent Publications Ltd., London, GB; AN 93-263587 XP002166360 & SU 1 755 077 A (KAMERTON SPEC CONSTR BUR), 15. August 1992 (1992-08-15)**

**Beschreibung**

Die vorliegende Erfindung betrifft eine Vorrichtung und ein Verfahren zur Bereitstellung eines von einer Änderung des Umgebungsdruckes abhängigen Signals zur Detektion einer Druckänderung in Folge eines Aufprallunfalls eines Kraftfahrzeuges.

Zur Detektion eines Aufpralls sind an Kraftfahrzeugen Drucksensoren vorhanden, die beispielsweise in Türhohlräumen angeordnet sind. Diese Hohlräume sind dabei nicht luftdicht abgeschlossen, sodass der Luftdruck in den Hohlräumen, und damit an dem Drucksensor, dem Luftdruck der Atmosphäre entspricht, in welcher sich das Fahrzeug befindet. Verformt sich die Karosserie um diesen Hohlraum infolge eines Aufpralls, so kann der Druck im Bereich des Sensors je nach Art des Aufpralls kurzzeitig ansteigen oder absinken, bis ein Druckausgleich mit der umgebenden Atmosphäre abgeschlossen ist. Zur Detektion eines Aufpralls werden derartige kurzfristige Druckschwankungen an dem Sensor ausgewertet, um abhängig davon Sicherheitssysteme, wie beispielsweise Airbags oder Gurtstraffer, zu aktivieren.

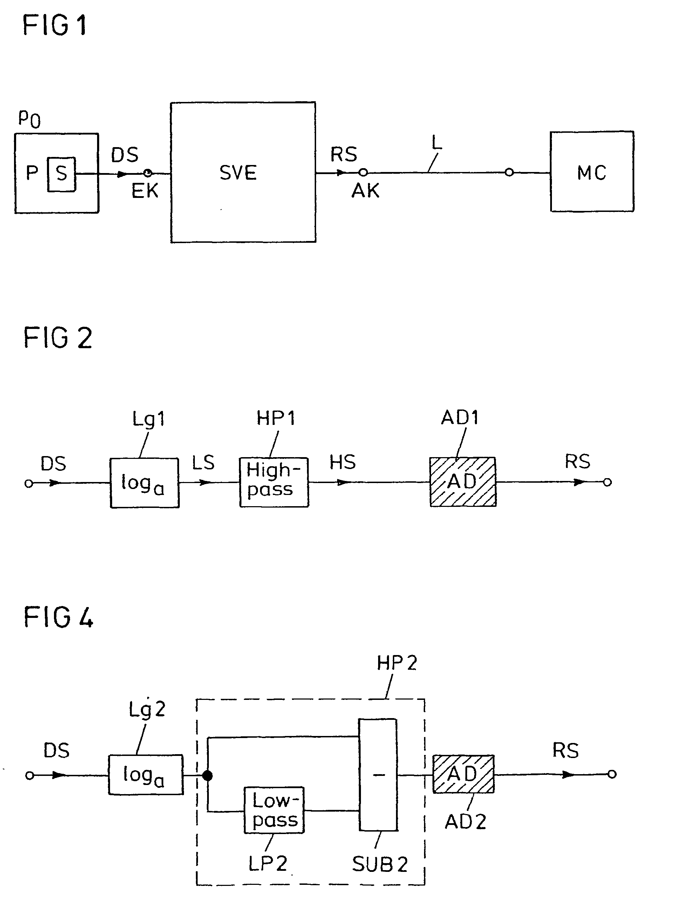

Die internationale Offenlegungsschrift WO 94/11 223 A1 offenbart eine Vorrichtung zur Bereitstellung eines von einer Änderung eines Umgebungsdrucks abhängigen Signals zur Detektion einer Druckänderung in Folge eines Aufpralls eines Kraftfahrzeugs (Figuren 1 und 2, Zusammenfassung sowie Beschreibung Seite 7, Zeilen 1 bis 33, Seite 8, Zeilen 15 bis 18 und Seite 13, Zeilen 16 bis 32) entsprechend dem Oberbegriff des Anspruchs 1. Die Vorrichtung weist einen Drucksensor zur Bereitstellung eines von einem Umgebungsdruck abhängigen Drucksignals auf sowie eine dem Drucksensor nachgeschaltete Signalverarbeitungseinheit, die wenigstens eine Hochpassfilteranordnung (Hochpaßfilter) aufweist.

Sollen der Sensor und die Auswerteschaltung räumlich getrennt voneinander angeordnet werden, beispielsweise dann, wenn eine oder mehrere Auswerteschaltungen für verschiedene Sensoren des Fahrzeugs an einer zentralen Stelle angeordnet werden, müssen die von den Drucksensoren gebildeten Signale über Leitungsverbindungen zu den Ansteuerschaltungen übertragen werden. Berücksichtigt man dabei, dass der Druck im Falle eines Aufpralls relativen Schwankungen zwischen -3 % und +20 % unterliegt und dass der atmosphärische Luftdruck Werte zwischen 600 mbar bis 1.200 mbar annehmen kann, so sind Sensorwerte für Drücke zwischen 582 mbar (97 % von 600 mbar) und 1.440 mbar (120 % von 1200 mbar) zu übertragen. Um die verhältnismäßig geringen relativen Schwankungen des Druckes an dem Sensor im Falle eines Aufpralls anhand des Drucksignals sicher erkennen zu können, ist bei einer digitalen Übertragung des Drucksignals eine sehr hohe Auflösung, d.h. eine feine Quantisierung jedes übertragenen Abtastwertes erforderlich. Dies macht die Übertragung der Drucksignale aufwendig und kompliziert.

Ziel der vorliegenden Erfindung ist es, eine Vorrichtung zur Verfügung zu stellen, die aus einem Drucksignal eines Drucksensors ein Signal bildet, welches zur Erkennung einer rapiden Druckänderung an dem Drucksensor genügt und welches ohne großen Aufwand digital übertragen werden kann.

Dieses Ziel wird durch eine Vorrichtung gemäß den Merkmalen des Anspruchs 1 und ein Verfahren gemäß den Merkmalen des Anspruchs 9 gelöst.

Danach weist die Vorrichtung einen Drucksensor zur Bereitstellung eines von einem Umgebungsdruck abhängigen Drucksignals und eine dem Drucksensor nachgeschaltete Verarbeitungseinheit auf, wobei die Verarbeitungseinheit wenigstens eine analoge Logarithmieranordnung und wenigstens eine Hochpassfilteranordnung aufweist.

Die erfindungsgemäße Vorrichtung bildet den Logarithmus des Drucksignals und unterwirft das logarithmierte Drucksignal einer Hochpassfilterung. Die im vorliegenden Fall interessierenden Sensorsignale für den Druck an dem Sensor verlaufen wenigstens annäherungsweise über lange Zeit konstant und sind dabei abhängig vom atmosphärischen Druck. Im Falle eines Aufpralls steigt der Druck an dem Sensor kurzfristig an, um dann wieder auf den Wert des atmosphärischen Drucks abzusinken und im weiteren konstant zu bleiben. Durch die Logarithmierung und anschließende Hochpassfilterung des Drucksignals liegt am Ausgang der erfindungsgemäßen Vorrichtung ein Signal an, welches für die Zeitdauer der Druckänderung während des Aufpralls proportional zu dem Logarithmus des Quotienten aus dem Druck an dem Sensor und dem vor und nach dem Aufprall herrschenden atmosphärischen Druck ist. Zur Erkennung eines Aufpralls ist lediglich die Änderung des Drucks an dem Sensor erforderlich. Das durch die erfindungsgemäße Vorrichtung gebildete logarithmische Signal ist ausschließlich von einer Änderung des Umgebungsdruckes an dem Sensor abhängig. Diese Änderung beträgt zwischen -3% und +20%, d.h. der Druck an dem Sensor kann kurzzeitig einen Wert zwischen 97% und 120% des ansonsten herrschenden atmosphärischen Drucks annehmen. Ein Signal mit einer solch kleinen Dynamik kann ohne großen Aufwand quantisiert und digital zu einer Steuerschaltung für die Sicherheitssysteme übertragen werden.

Vorteilhafte Ausgestaltungen der Erfindung sind Gegenstand der Unteransprüche.

Erfindungsgemäß ist vorgesehen, dass das Drucksignal einer analogen Logarithmieranordnung zugeführt ist, wobei ein Ausgangssignal der analogen Logarithmieranordnung einer Hochpassfilteranordnung zugeführt ist.

Gemäß einer vorteilhaften Ausführungsform der Erfindung weist die Hochpassfilteranordnung vorzugsweise ein Tiefpassfilter auf, dem das Ausgangssignal des analogen Logarithmierers zugeführt ist und sie weist vorzugsweise einen Subtrahierer auf, dem das Ausgangssignal des analogen Logarithmierers und des Ausgangssignal des Tiefpassfilters zugeführt ist. Eine derartige Anordnung wirkt als Hochpassfilter und wird dann verwendet, wenn die Herstellung eines Hochpassfilters als Hochpassfilteranordnung aus irgendwelchen Gründen nicht möglich oder nicht erwünscht ist.

Eine weitere Ausführungsform der Erfindung sieht vor, dass die Hochpassfilteranordnung einen Subtrahierer aufweist, dem das Ausgangssignal des analogen Logarithmierers und ein am Ausgang eines Rückkopplungszweiges anliegendes Rückkopplungssignal zugeführt ist, wobei das Rückkopplungssignal von einem Ausgangssignal des Subtrahierers abhängig ist. Der Rückkopplungszweig weist dabei vorzugsweise einen an den Ausgang des Subtrahierers angeschlossenen Analog-Digital-Wandler, einen dem Analog-Digital-Wandler nachgeschalteten Integrierer und einen dem Integrierer nachgeschalteten Digital-Analog-Wandler auf. Diese Anordnung, welche mittels des Subtrahierers von dem logarithmierten Drucksignal den Mittelwert der logarithmierten Drucksignale innerhalb eines vorangegangenen Zeitfensters subtrahiert, wirkt ebenfalls als Hochpassfilter.

Die vorliegende Erfindung wird nachfolgend in Ausführungsbeispielen anhand von Figuren näher erläutert. Es zeigt:

Figur 1: Blockschaltbild einer erfindungsgemäßen Schaltungsanordnung mit einem Sensor und einer Signalverarbeitungseinheit, die über eine Leitungsverbindung an einen Mikrocontroller angeschlossen ist;

Figur 2: Ausführungsbeispiel einer Signalverarbeitungseinheit mit einem analogen Logarithmierer und einem Hochpassfilter;

Figur 3: zeitlicher Verlauf ausgewählter Signale in der Verarbeitungseinheit gemäß Fig. 2;

Figur 4: Ausführungsbeispiel einer Signalverarbeitungseinheit mit einer Hochpassfilteranordnung aus einem Tiefpass und einem Subtrahierer;

Figur 5: Signalverarbeitungseinheit, die einen Subtrahierer mit Rückkopplungszweig als Hochpassfilteranordnung aufweist;

Figur 6: Signalverarbeitungseinheit mit zwei analogen Logarithmierern;

Figur 7: Signalverarbeitungseinheit mit einer AbtastHaltevorrichtung zur Hochpassfilterung eines logarithmierten Drucksignals;

Figur 8: weiteres Ausführungsbeispiel einer Signalverarbeitungseinheit mit einer Abtast-Halteeinrichtung zur Hochpassfilterung eines logarithmierten Drucksignals.

In den Figuren bezeichnen, sofern nicht anders angegeben, gleiche Bezugszeichen gleiche Teile mit gleicher Bedeutung. Fig. 1 zeigt ein Blockschaltbild einer erfindungsgemäßen Vorrichtung, die einen Drucksensor S und eine Signalverarbeitungseinheit SVE aufweist. Zum besseren Verständnis ist in Fig. 1 eine Ausgangsklemme AK der Signalverarbeitungseinheit SVE über eine Leitungsverbindung L an einen Mikrocontroller MC angeschlossen. Der Drucksensor S stellt ein Drucksignal DS zur Verfügung, welches von dem Druck p in der Umgebung des Drucksensors S abhängig ist. Das Drucksignal DS ist einer Eingangsklemme EK der Signalverarbeitungseinheit SVE zugeführt, wobei am Ausgang AK der Signalverarbeitungseinheit SVE ein Signal anliegt, welches von einer Änderung des Umgebungsdruckes p an dem Drucksensor S abhängig ist.

Der Sensor S ist beispielsweise in einem Hohlraum der Karosserie eines Kraftfahrzeuges untergebracht, wobei dieser Hohlraum nicht luftdicht abgeschlossen ist und wobei sich die Karosserie in einer Atmosphäre mit einem atmosphärischen Druck $p_0$ befindet. Der Druck p in dem Hohlraum entspricht aufgrund des nicht hermetischen Abschlusses unter normalen Umständen dem atmosphärischen Luftdruck $p_0$, der allenfalls langsamen Schwankungen unterliegt. Verformt sich im Falle eines Aufpralles der Hohlraum, so kann der Druck p in der Umgebung des Sensors S für kurze Zeit ansteigen oder absinken, bis ein Druckausgleich mit der den Hohlraum umgebenden Atmosphäre stattgefunden hat. Das Ausgangssignal RS der Signalverarbeitungseinheit SVE ist ausschließlich von Änderungen des Umgebungsdrucks p des Sensors S relativ zu dem atmosphärischen Druck $p_0$ und nicht auch von dem atmosphärischen Druck $p_0$ abhängig, welcher höhenbedingt Werte zwischen 600 mbar und 1200 mbar annehmen kann. Auch das Wetter besitzt einen Einfluss auf den atmosphärischen Druck. Die relativen Änderungen des Drucks p im Falle eines Aufpralls betragen zwischen -3% und +20%.

Fig. 2 zeigt ein erstes Ausführungsbeispiel einer Signalverarbeitungseinheit SVE, die einen analogen Logarithmierer Lg1, ein dem Logarithmierer Lg1 nachgeschaltetes Hochpassfilter HP1 und einen dem Hochpassfilter HP1 nachgeschalteten Analog-Digital-Wandler AD1 aufweist. Das von den Änderungen des Drucksignals DS abhängige Relativsignal RS liegt am Ausgang des Analog-Digital-Wandlers AD1 als digitales Signal vor, welches übertragen werden kann.

Die Funktionsweise der in Fig. 2 dargestellten Signalverarbeitungseinheit mit einem analogen Logarithmierer Lg1 und einer Hochpassfilteranordnung HP1 wird nachfolgend anhand zeitlicher Verläufe des in Fig. 2 eingezeichneten Drucksignals DS, eines Ausgangssignals LS des Logarithmierers Lg1 und eines Ausgangssignals HS des Hochpassfilters HP1 veranschaulicht.

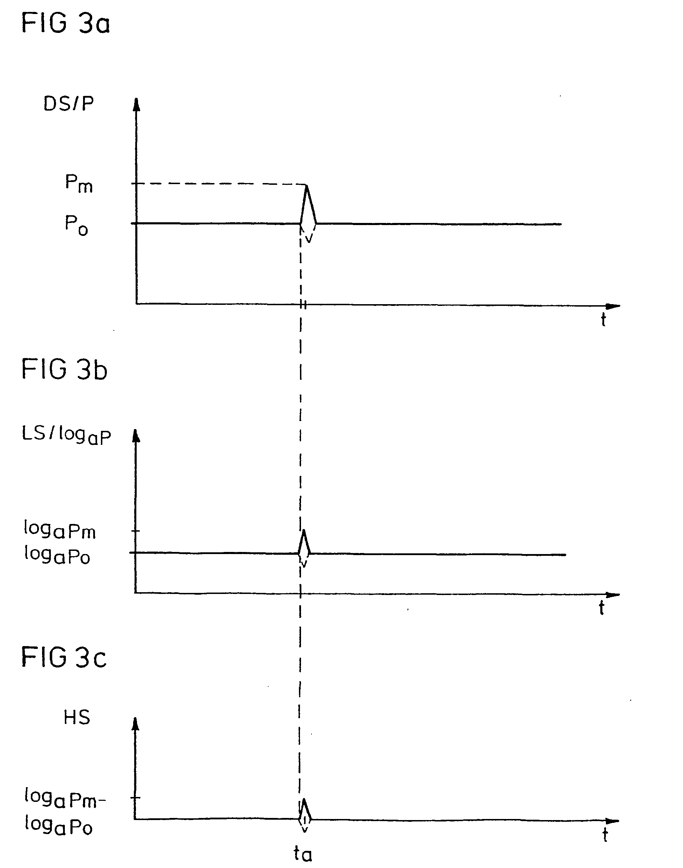

Fig. 3a zeigt den typischen Verlauf des Umgebungsdrucks p des Drucksensors S, beziehungsweise des von dem Umgebungsdruck p abhängigen Drucksignals DS. Für die folgende Erläuterung ist angenommen, dass das Drucksignal DS dem Druck p entspricht. Der Umgebungsdruck p des Sensors S entspricht unter normalen Umständen dem Luftdruck $p_0$ der Atmosphäre, in welcher sich das Fahrzeug befindet. Im Falle eines Aufpralls auf den Hohlraum, in welchem der Sensor S angeordnet ist, kommt es zu kurzzeitigen Schwankungen des Umgebungsdrucks p, die aus einer Deformation des Hohlraumes resultieren und solange anhalten, bis ein Druckausgleich zwischen dem deformierten Hohlraum und der umgebenden Atmosphäre stattgefunden hat. Der Umgebungsdruck p kann, wie in Fig. 3a ab dem Zeitpunkt $t_a$ eingezeichnet ist, ansteigen oder, wie gestrichelt eingezeichnet ist, absinken. Der Druckverlauf weist im Moment des Aufpralls einen Impuls auf, wobei ein Spitzenwert $p_m$ des Impulses üblicherweise nicht mehr als das 1,2-fache des atmosphärischen Drucks $p_0$ beträgt. Der Minimalwert des Umgebungsdrucks p bei einem Druckabfall im Falle des Aufpralls beträgt üblicherweise nicht weniger als das 0,97-fache des atmosphärischen Drucks $p_0$ .

Am Ausgang des analogen Logarithmierers Lg1 liegt ein Signal LS an, welches dem logarithmierten Drucksignal DS, beziehungsweise dem logarithmierten Umgebungsdruck P entspricht. Als Logarithmierer Lg1 kann ein beliebiger herkömmlicher analoger Logarithmierer verwendet werden, wie er beispielsweise aus Tietze, Schenk: "Halbleiter-Schaltungstechnik", 9. Auflage, Springer-Verlag, Berlin, 1991, Seite 332 ff. bekannt ist. Der Logarithmierer Lg1 bildet den Logarithmus des Drucksignals DS in bezug zur Basis a, wobei die Basis a nahezu beliebige Werte annehmen kann und insbesondere 10 zur Bildung des dekadischen Logarithmus und e zur Bildung des natürlichen Logarithmus ist.

Fig. 3b zeigt den zeitlichen Verlauf des Ausgangssignals LS des Logarithmierers Lg1, das ebenfalls zum Zeitpunkt $t_a$ einen Impuls aufweist, dessen maximaler Wert dem Logarithmus zur Basis a des maximalen Druckwerts $p_m$ ($\log_a(p_m)$) entspricht. Im übrigen weist das Ausgangssignal LS einen Wert auf, der dem Logarithmus zur Basis a des atmosphärischen Drucks $p_0$ ($\log_a(p_0)$) entspricht.

Am Ausgang des Hochpassfilters HP1 liegt ein Ausgangssignal HS an, welches im wesentlichen dem Logarithmussignal LS entspricht, welches um den Gleichanteil $\log_a(p_0)$ reduziert ist. Das Hochpassfilter HP1 ist vorzugsweise derart gewählt, dass der Impuls des Logarithmussignals LS durch die Hochpassfilterung in seiner Form wenigstens annäherungsweise unverändert bleibt.

Das Ausgangssignal HS des Hochpassfilters HP1 ist proportional zu $\log_a(p) - \log_a(p_0)$ und unter Berücksichtigung mathematischer Rechenregeln für den Logarithmus proportional zu $\log_a(p/p_0)$, d.h.

$$HS \sim \log_a(p) - \log_a(p_0) = \log_a(p/p_0)$$

Setzt man

$$r = (p - p_0)/p_0$$

in diese Beziehung ein gilt:

$$HS \sim \log_a(r+1).$$

r ist dabei die relative Abweichung des Umgebungsdrucks p des Sensors S von dem atmosphärischen Druck $p_0$ im Falle eines Aufpralls. Für die Detektion eines Aufpralls genügt es, den Wert der relativen Abweichung r des Drucks p von dem Umgebungsdruck $p_0$ zu kennen. Im Normalfall beträgt dieser Wert 0 und kann im Falle eines Aufpralls auf bis zu -0,03 absinken oder auf bis zu 0,2 ansteigen. Ein Signal mit einer solch kleinen Schwankungsbreite kann sehr genau übertragen werden.

Der Wert $\log_a(r+1)$ ist für diese Werte von r in guter Näherung proportional zu r, sodass am Ausgang des Hochpassfilters HP1 ein Signal anliegt, welches proportional zu relativen Änderungen r des Umgebungsdrucks p an dem Sensor S ist. Dieses analoge Relativsignal wird mittels des Analog-Digital-Wandlers in ein digitales Signal umgewandelt und kann dann über die Leitung L zu einer Steuereinheit für Sicherheitssysteme übertragen werden, die abhängig von dem Signal ein Sicherheitssystem, beispielsweise einen Airbag, auslösen kann.

Änderungen des atmosphärischen Luftdrucks erfolgen sehr langsam im Verhältnis zu den Signalimpulsen im Falle eines Aufpralls, sodass diese Änderungen durch die Hochpassfilterung, ausgefiltert werden. Das Ausgangssignal HS des Hochpassfilters HP1 wird durch den Analog-Digital-Wandler in bekannter Weise quantisiert und vorzugsweise in ein digitales Wort der Länge n umgewandelt. Die Anzahl der Quantisierungsstufen beträgt dann $2^n$, wobei n so gewählt ist, dass das digitale Signal eine ausreichende Auflösung zur Erkennung von Druckschwankungen infolge eines Aufpralls aufweist.

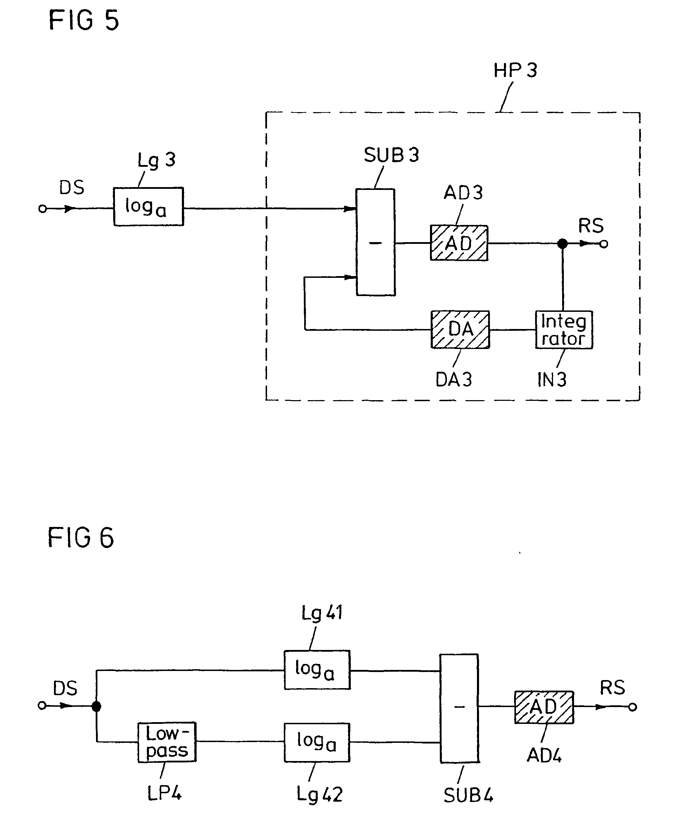

Fig. 4 zeigt ein weiteres Ausführungsbeispiel einer Signalverarbeitungseinheit bei der das Drucksignal DS einem analogen Logarithmierer Lg2 zugeführt ist, wobei dem Logarithmierer Lg2 eine Hochpassfilteranordnung HP2 nachgeschaltet ist, die ein Tiefpassfilter LP2 und einen Subtrahierer SUB2 aufweist. Ein Ausgangssignal des Logarithmierers Lg2 ist sowohl einem Eingang des Subtrahierers SUB2 als auch dem Tiefpassfilter Lg2 zugeführt, wobei ein Ausgangssignal des Tiefpassfilters LP2 einem weiteren Eingang des Subtrahierers SUB2 zugeführt ist. Der Subtrahierer SUB2 subtrahiert das logarithmierte Drucksignal von dem tiefpassgefilterten logarithmierten Drucksignal. Am Ausgang des Tiefpassfilters, der derart ausgebildet ist, dass er aufprallbedingte Impulse des logarithmierten Drucksignals herausfiltert, liegt ein im wesentlichen konstantes Signal an, welches dem Logarithmus des atmosphärischen Drucks $p_0$ entspricht. Das am Ausgang des Subtrahierers SUB2 anliegende Signal entspricht dann dem in Fig. 3c dargestellten Signal, welches wie oben erläutert, mittels eines Analog-Digital-Wandlers digitalisiert und an eine Steuereinrichtung übertragen wird.

Fig. 5 zeigt ein weiteres Ausführungsbeispiel einer erfindungsgemäßen Signalverarbeitungseinheit, bei der einem analogen Logarithmierer Lg3, dem.das Drucksignal DS zugeführt ist, eine Hochpassfilteranordnung nachgeschaltet ist, die einen Subtrahierer SUB3 und einen Rückkopplungszweig aufweist. Einem Eingang des Subtrahierers SUB3 ist dabei ein Ausgangssignal des Logarithmierers Lg3 zugeführt. Ein Ausgangssignal des Subtrahierers SUB3 ist einem Analog-Digital-Wandler AD3 zugeführt, an dessen Ausgang das relative Drucksignal RS anliegt, wobei eine Folge von Ausgangswerten dieses relativen Drucksignals mittels eines Integrierers IN3 aufsummiert und nach einer anschließenden Digital-Analog-Wandlung mittels eines Digital-Analog-Wandlers DA3 einem weiteren Eingang des Subtrahierers SUB3 zugeführt ist.

Fig. 6 zeigt ein weiteres Ausführungsbeispiel einer erfindungsgemäßen Signalverarbeitungseinheit, bei welcher das Drucksignal DS zum einem direkt einem analogen Logarithmierer Lg41 und zum anderen tiefpassgefiltert mittels eines Tiefpassfilters LP4 einem zweiten analogen Logarithmierer Lg42 zugeführt ist, wobei ein Subtrahierer SUB4 das Ausgangssignal des zweiten Logarithmierers Lg42 von dem Ausgangssignal des ersten analogen Logarithmierers Lg41 subtrahiert. Das Ausgangssignal des Subtrahierers SUB4 entspricht dabei dem in Fig. 3c dargestellten Signal. Das Ausgangssignal des Subtrahierers SUB4 wird anschließend einer Analog-Digital-Wandlung mittels eines Analog-Digital-Wandlers AD4 unterzogen, wobei am Ausgang des AD-Wandlers AD4 ein digitalisiertes Signal RS zur Verfügung steht, welches Informationen bezüglich Änderungen des Umgebungsdrucks p des Drucksensors S gegenüber dem atmosphärischen Druck $p_0$ enthält.

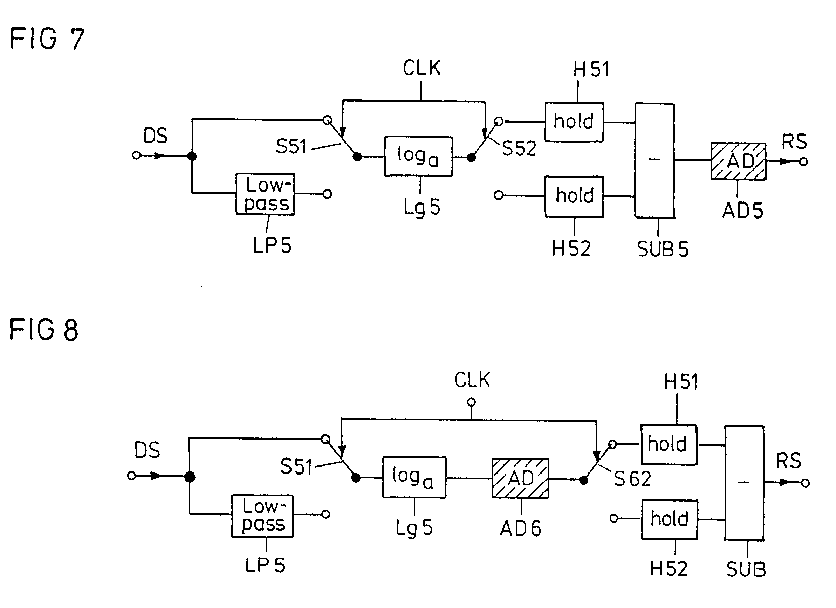

Fig. 7 zeigt eine weitere Ausführungsform einer erfindungsgemäßen Signalverarbeitungseinheit, welche zwei Verarbeitungszweige aufweist, zwischen denen mittels Abtasteinrichtungen S51, S52 hin- und hergeschaltet werden kann. Zwischen den Abtasteinrichtungen S51, S52 ist ein analoger Logarithmierer Lg5 verschaltet. Die Abtasteinrichtungen S51, S52 sind nach Maßgabe eine Taktes CLK angesteuert. Die erste Abtasteinrichtung S51 schließt den Logarithmierer Lg5 nach Maßgabe des Taktes CLK direkt an das Drucksignal DS oder an einen Ausgang eines Tiefpassfilter LP5 an, wobei einem Eingang des Tiefpassfilters LP5 das Drucksignal DS zugeführt ist. Die zweite Abtasteinrichtung S52 schließt den Ausgang des analogen Logarithmierers Lg5 nach Maßgabe des Taktes CLK an ein erstes Halteglied H51, welches an einen ersten Eingang eines Subtrahierers SUB5 angeschlossen ist, oder an ein zweites Halteglied H52, welches an einen zweiten Eingang des Subtrahierers SUB5 angeschlossen ist, an. Die Abtasteinrichtungen S51, S52 sind dabei so gesteuert, dass das Ausgangssignal des Logarithmierers Lg5 dem ersten Halteglied H51 zugeführt ist, wenn am Eingang des Logarithmierers Lg5 das Drucksignal DS anliegt, und dass das Ausgangssignal des Logarithmierers Lg5 dem zweiten Halteglied H52 zugeführt ist, wenn der Eingang des Logarithmierers Lg5 an den Ausgang des Tiefpassfilters LP5 angeschlossen ist. Der Subtrahierer SUB5 subtrahiert das Ausgangssignal des zweiten Halteglieds H52 von dem Ausgangssignal des ersten Halteglieds H51. Das am Ausgang des Subtrahierers SUB5 anliegende analoge Signal entspricht dem in Fig. 3c dargestellten Signal, welches nachfolgend mittels eines AD-Wandlers AD5 in ein digitales Signal RS umgewandelt wird.

Fig. 8 zeigt ein weiteres Ausführungsbeispiel einer Schaltungsanordnung, welche sich von der in Fig. 7 dargestellten dadurch unterscheidet, dass dem Logarithmierer Lg5 ein AD-Wandler AD6 nachgeschaltet ist, welcher das analoge Ausgangssignal des Logarithmierers Lg5 abtastet und die zeitdiskreten Abtastwerte über die zweite Abtasteinrichtung S62 nach Maßgabe des Taktes CLK der ersten und zweiten Halteeinrichtung H51, H52 zuführt. Am Ausgang des Subtrahierers SUB5 liegt dann ein zeitdiskretes Signal RS an, welches zur weiteren Übertragung gegebenenfalls noch digitalisiert werden kann. Auch dieses Signal RS ist ausschließlich von Änderungen des Umgebungsdrucks p des Sensors S und nicht vom Absolutwert des atmosphärischen Luftdrucks $p_0$ abhängig.

**Patentansprüche**

1. Vorrichtung zur Bereitstellung eines von einer Änderung des Umgebungsdrucks abhängigen Signals zur Detektion einer Druckänderung in einem nicht luftdicht abgeschlossenen Hohlraum einer Kraftfahrzeugkarosserie in Folge eines Aufpralles eines Kraftfahrzeuges mit

   - einem Drucksensor (S) zur Bereitstellung eines von einem Umgebungsdruck (p) abhängigen Drucksignals (DS) in dem nicht luftdicht abgeschlossenen Hohlraum der Fahrzeugkarosserie,
   - einer dem Drucksensor (S) nachgeschalteten Signalverarbeitungseinheit (SVE), die wenigstens eine Hochpassfilteranordnung (HP1; LP2, SUB2; SUB3, AD3, IN3, DA3; SUB4, LP4; SUB5, LP5; SUB, LP5) aufweist,

   *dadurch gekennzeichnet, dass* das Drucksignal (DS) einer analogen Logarithmieranordnung (Lg1; Lg2; Lg3; Lg41; Lg5) zugeführt ist und dass ein Ausgangssignal der analogen Logarithmieranordnung (Lg1; Lg2; Lg3; Lg41; Lg5) der Hochpassfilteranordnung (HP1; LP2, SUB2; SUB3, AD3, IN3, DA3; SUB4, LP4; SUB5, LP5; SUB, LP5) zugeführt ist und ein Ausgangssignal der Hochpassfilteranordnung (HP1; LP2, SUB2; SUB3, AD3, IN3, DA3; SUB4, LP4; SUB5, LP5; SUB, LP5) einem Analog-Digital-Wandler (ADS1; AD2; AD3; AD4; AD5; AD6) zugeführt ist.

2. Vorrichtung nach Anspruch 1, bei der die Hochpassfilteranordnung ein Hochpassfilter (HP1) ist.

3. Vorrichtung nach Anspruch 1, **dadurch gekennzeichnet, dass** die Hochpassfilteranordnung (HP2) ein Tiefpassfilter (LP2), der das Ausgangssignal des analogen Logarithmierers (Lg2) zugeführt ist, und einen Subtrahierer (SUB2), dem das Ausgangssignal des analogen Logarithmierers (Lg2) und das Ausgangssignal des Tiefpassfilters (LP2) zugeführt ist, aufweist.

4. Vorrichtung nach Anspruch 1, *dadurch gekennzeichnet, dass* die Hochpassfilteranordnung (HP3) einen Subtrahierer (SUB3) aufweist, dem das Ausgangssignal des analogen Logarithmierers (Lg3) und ein am Ausgang eines Rückkopplungszweiges anliegendes Rückkopplungssignal zugeführt ist, wobei das Rückkopplungssignal von einem Ausgangssignal des Subtrahierers (SUB3) abhängig ist.

5. Vorrichtung nach Anspruch 3, *dadurch gekennzeichnet, dass* der Rückkopplungszweig einen an den Ausgang des Subtrahierers (SUB3) angeschlossenen Analog-Digital-Wandler (AD3), einen dem Analog-Digital-Wandler (AD3) nachgeschalteten Integrierer (IN3) und einen dem Integrierer nachgeschalteten Digital-Analog-Wandler (DA3) aufweist.

6. Vorrichtung nach Anspruch 1 oder 2, *dadurch gekennzeichnet, dass* das Drucksignal einem ersten analogen Logarithmierer (Lg41) und über ein Tiefpassfilter (LP4) einem zweiten analogen Logarithmierer (Lg42) zugeführt ist, wobei Ausgangssignale des ersten und zweiten analogen Logarithmierers (Lg41, Lg42) einem Subtrahierer (SUB4) zugeführt sind.

7. Vorrichtung nach Anspruch 1 oder 2, die folgende Merkmale aufweist:

   - ein Tiefpassfilter (LP5), dem das Drucksignal (DS) zugeführt ist,
   - einen analogen Logarithmierer (Lg5),
   - eine erste Schalteranordnung (S51), über welche dem analogen Logarithmierer (Lg5) nach Maßgabe eines Taktes (CLK) das Drucksignal (DS) oder das Ausgangssignal des Tiefpassfilters (LP5) zugeführt ist,
   - ein erstes an einen Subtrahierer (SUB5) angeschlossenes Halteglied (H51) und ein zweites an den Subtrahierer (SUB5) angeschlossenes Halteglied (H52),
   - eine zweite Schalteranordnung (S52), über welche dem ersten oder zweiten Halteglied (H51, H52) ein Ausgangssignal des analogen Logarithmierers (Lg5) nach Maßgabe des Taktes (CLK) zugeführt ist.

8. Vorrichtung nach Anspruch 7, bei der dem analogen Logarithmierer (Lg5) ein Analog-Digital-Wandler (AD6) nachgeschaltet ist.

9. Verfahren zur Bereitstellung eines von Änderungen des Umgebungsdrucks abhängigen Signals zur Detektion einer Druckänderung in einem nicht luftdicht abgeschlossenen Hohlraum einer Kraftfahrzeugkarosserie in Folge eines Aufpralles des Kraftfahrzeuges, das folgende Merkmale aufweist:

   - Bereitstellen eines von einem Umgebungsdruck (p) in dem nicht luftdicht abgeschlossenen Hohlraum der Kraftfahrzeugkarosserie abhängigen Drucksignals (DS) mittels eines Drucksensors (S),
- Bilden des Logarithmus des Drucksignals (DS),
- Hochpassfilterung des logarithmierten Drucksignals.

**Claims**

1. Device for providing a signal depending on a change in the ambient pressure in order to detect a pressure change in a non hermetically sealed cavity of a car body as a result of an impact of a motor vehicle, comprising

   - a pressure sensor (S) for providing a pressure signal (DS) depending on an ambient pressure (p) in the non hermetically sealed cavity in the motor vehicle body,
   - a signal processing unit (SVE) mounted downstream of the pressure sensor (S) which comprises a high-pass filter system (HP1; LP2, SUB2; SUB3, AD3, IN3, DA3; SUB4, LP4; SUB5, LP5; SUB, LP5),

   *characterized in that* the pressure signal (DS) is fed to an analogue logarithmic system (Lg1; Lg2; Lg3; Lg41; Lg5) and that an output signal of the analogue logarithmic system (Lg1; Lg2; Lg3; Lg41; Lg5) is fed to the high-pass filter system (HP1; LP2, SUB2; SUB3, AD3, IN3, DA3; SUB4, LP4; SUB5, LP5) and an output signal of the high-pass filter system (HP1; LP2, SUB2; SUB3, AD3, IN3, DA3; SUB4, LP4; SUB5, LP5) is fed to an analogue-to-digital converter (ADS1; AD2; AD3; AD4; AD5; AD6).

2. Device according to claim 1, wherein the high-pass filter system is a high-pass filter (HP1).

3. Device according to claim 1, *characterized in that* the high-pass filter system (HP2) comprises a low-pass filter (LP2) to which the output signal of the analogue logarithmic module (Lg2) is fed and a subtractor (SUB2) to which the output signal of the analogue logarithmic module (Lg2) and the output signal of the low-pass filter (LP2) are fed.

4. Device according to claim 1, *characterized in that* the high-pass filter system (HP3) comprises a subtractor (SUB3) to which the output signal of the analogue logarithmic module (Lg3) and a feedback signal applied at the output of a feedback path are fed, the feedback signal depending on an output signal of the subtractor (SUB3).

5. Device according to claim 3, *characterized in that* the feedback path has an analogue-to-digital converter (AD3) connected to the output of the subtractor (SUB3), an integrator (IN3) mounted downstream of the analogue-to-digital converter (AD3) and a digital-to-analogue converter (DA3) mounted downstream of the integrator.

6. Device according to claim 1 or 2, *characterized in that* the pressure signal is fed to a first analogue logarithmic module (Lg41) and via a low-pass filter (LP4) to a second analogue logarithmic module (Lg42), output signals of the first and second analogue logarithmic module (Lg41, Lg42) being fed to a subtractor (SUB4).

7. Device according to claim 1 or 2 comprising the following features:

   - a low-pass filter (LP5) to which the pressure signal (DS) is fed,
   - an analogue logarithmic module (Lg5),
   - a first switch arrangement (S51) via which the pressure signal (DS) or the output signal of the low-pass filter (LP5) is fed to the analogue logarithmic module (Lg5) in accordance with a clock pulse (CLK),
   - a first holding element (H51) connected to a subtractor (SUB5) and a second holding element (H52) connected to the subtractor (SUB5),
   - a second switch arrangement (S52) via which an output signal of the analogue logarithmic module (Lg5) is fed to the first or second holding element (H51, H52) in accordance with the clock pulse (CLK).

8. Device according to claim 7, wherein an analogue-to-digital converter (AD6) is mounted downstream of the analogue logarithmic module (Lg5).

9. Method for providing a signal depending on changes in an ambient pressure for detecting a change in pressure in a non hermetically sealed cavity of a motor vehicle body as a result of an inpact of the motor vehicle, having the following features:

   - provision of a pressure signal (DS) depending on an ambient pressure (p) in the non hermetically sealed cavity of the motor vehicle body by means of a pressure sensor (S),
- generation of the logarithm of the pressure signal (DS),
- high-pass filtering of the logarithmised pressure signal.

**Revendications**

1. Dispositif pour délivrer un signal qui dépend d'une variation de la pression environnante, en vue de détecter dans une cavité fermée de manière non étanche à l'air d'une carrosserie automobile une variation de pression due à une collision d'un véhicule automobile, comportant

   - un capteur de pression (S), qui est destiné à délivrer un signal de pression (DS), qui dépend d'une pression environnante (p), et qui est agencé dans la cavité fermée de manière non étanche à l'air dans la carrosserie du véhicule automobile,
   - une unité de traitement des signaux (SVE), qui est montée en aval du capteur de pression (S) et qui comporte au moins un système de filtrage passe-haut (HP1; LP2, SUB2 ; SUB3, AD3, IN3, DA3 ; SUB4, LP4 ; SUB5, LP5; SUB, LP5),

   **caractérisé en ce que** le signal de pression (DS) est acheminé vers un calculateur logarithmique analogique (Lg1 ; Lg2 ; Lg3 ; Lg41 ; Lg5) et **en ce qu'**un signal de sortie du calculateur logarithmique analogique (Lg1 ; Lg2 ; Lg3 ; Lg41 ; Lg5) est acheminé vers le système de filtrage passe-haut (HP1 ; LP2, SUB2 ; SUB3, AD3, IN3, DA3 ; SUB4, LP4 ; SUB5, LP5 ; SUB, LP5) et un signal de sortie du système de filtrage passe-haut (HP1 ; LP2, SUB2 ; SUB3, AD3, IN3, DA3 ; SUB4, LP4 ; SUB5, LP5 ; SUB, LP5) est acheminé vers un convertisseur analogique/numérique (ADS1 ; AD2 ; AD3 ; AD4 ; AD5 ; AD6).

2. Dispositif selon la revendication 1, dans lequel le système de filtrage passe-haut est un filtre passe-haut (HP1).

3. Dispositif selon la revendication 1, **caractérisé en ce que** le système de filtrage passe-haut (HP2) comporte un filtre passe-bas (LP2), vers lequel est acheminé le signal de sortie du calculateur logarithmique analogique (Lg2), et un soustracteur (SUB2), vers lequel est acheminé le signal de sortie du calculateur logarithmique analogique (Lg2) et le signal de sortie du filtre passe-bas (LP2).

4. Dispositif selon la revendication 1, **caractérisé en ce que** le système de filtrage passe-haut (HP3) comporte un soustracteur (SUB3), vers lequel sont acheminés le signal de sortie du calculateur logarithmique (Lg3) et un signal de rétroaction délivré à la sortie d'une branche de rétroaction, le signal de rétroaction étant fonction d'un signal de sortie du soustracteur (SUB3).

5. Dispositif selon la revendication 3, **caractérisé en ce que** la branche de rétroaction comporte un convertisseur analogique/numérique (AD3) raccordé à la sortie du soustracteur (SUB3), un intégrateur (IN3), monté en aval du convertisseur analogique/numérique (AD3), et un convertisseur numérique/analogique (DA3) monté en aval de l'intégrateur.

6. Dispositif selon la revendication 1 ou 2, **caractérisé en ce que** le signal de pression est acheminé vers un premier calculateur logarithmique analogique (Lg41) et via un filtre passe-bas (LP4) vers un deuxième calculateur logarithmique analogique (Lg42), les signaux de sortie du premier et du deuxième calculateur logarithmique analogique (Lg41, Lg42) étant acheminés vers un soustracteur (SUB4).

7. Dispositif selon la revendication 1 ou 2, comportant les caractéristiques suivantes :

   - un filtre passe-bas (LP5), vers lequel est transmis le signal de pression (DS),
   - un calculateur logarithmique analogique (Lg5),
   - un premier agencement de commutateur (S51), par l'intermédiaire duquel le signal de pression (DS) ou le signal de sortie du filtre passe-bas (LP5) est acheminé vers le calculateur logarithmique analogique (Lg5) conformément à une cadence (CLK),
   - un premier organe de maintien (H51) raccordé à un soustracteur (SUB5) et un deuxième organe de maintien (H52) raccordé au soustracteur (SUB5),
   - un deuxième agencement de commutateur (S52), par l'intermédiaire duquel un signal de sortie du calculateur logarithmique analogique (Lg5) est acheminé vers le premier ou le deuxième organe de maintien (H51, H52) conformément à la cadence (CLK).

8. Dispositif selon la revendication 7, dans lequel un convertisseur analogique/numérique (AD6) est monté en aval du calculateur logarithmique analogique (Lg5).

9. Procédé pour délivrer un signal qui dépend des variations de la pression environnante, en vue de détecter dans une cavité fermée de manière non étanche à l'air d'une carrosserie automobile une variation de pression due à une collision d'un véhicule automobile, comportant les caractéristiques suivantes :

   - mise à disposition d'un signal de pression (DS), dépendant d'une pression environnante (p), par l'intermédiaire d'un capteur de pression (S) disposé dans une cavité fermée de manière non étanche à l'air dans la carrosserie du véhicule automobile,
   - formation du logarithme du signal de pression (DS),
   - filtrage passe-haut du signal de pression logarithmique.

## FIG 1

## FIG 2

## FIG 4

## FIG 3a

## FIG 3b

## FIG 3c

FIG 5

FIG 6

FIG 7

FIG 8

EP 1 315 643 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• WO 9411223 A1

**In der Beschreibung aufgeführte Nicht-Patentliteratur**

• **SCHENK.** Halbleiter-Schaltungstechnik. Springer-Verlag, 1991, 332 ff